# EUROPÄISCHE PATENTSCHRIFT

(11) **EP 0 387 428 B1**
(45) Veröffentlichungstag und Bekanntmachung des Hinweises auf die Patenterteilung: **06.10.1993**
(21) Anmeldenummer: 89250102.4
(22) Anmeldetag: 04.12.1989
(51) Int. Cl.: A61C 13/265

(54) **Steckverbindung zum lösbaren Anbringen eines Prothesenaufbaus**
Snap-in connection for releasably mounting a dental prosthesis
Dispositif de fixation amovible de prothèse dentaire

(30) Priorität: 14.02.1989 DE 3904340
(43) Veröffentlichungstag der Anmeldung: 19.09.1990
(73) Patentinhaber: IMZ-Fertigungs- und Vertriebsgesellschaft für dentale Technologie mbH, 70794 Filderstadt (DE); EBERLE MEDIZINTECHNISCHE ELEMENTE GMBH, D-75449 Wurmberg (DE)
(72) Erfinder: Dürr, Walter, D-75196 Remchingen (DE); Kirsch, Axel, Dr., D-70794 Filderstadt (DE)
(74) Vertreter: Goddar, Heinz J., Dr.

(56) Entgegenhaltungen:
- CH-A- 350 072
- DE-A- 3 406 448
- DE-A- 3 413 811

## Beschreibung

Die Erfindung betrifft eine Steckverbindung nach dem Oberbegriff des Patentanspruches 1.

Aus der CH-A-350 072 ist eine Steckverbindung der vorstehend beschriebenen Art bekannt, bei der das axial federnde Lagerelement zwischen dem Steckerteil und dem Sockelteil aus einer Feder besteht, die bei ihrem Nachgeben eine buchsenartige Verschiebung des Sockelteils bezüglich des Steckerteiles ermöglicht. Ungünstig ist hierbei, daß bei einer Schrägbeanspruchung des Sockelteils ein Verkanten desselben gegenüber des Steckerteils erfolgen kann. Dabei ist zu beachten, daß derartige gemischte axiale und Scher-Beanspruchungen beim Kauvorgang völlig normal sind. Sofern nun ein derartiges Verkanten auftritt, selbst dann schon, wenn keine vollständige Hemmung der Relativbewegung zwischen dem Sockelteil und dem Steckerteil erfolgt, kann es nicht mehr zu der erwünschten Abfederung der axialen Stoßbeanspruchung kommen. Außerdem ist der Aufbau bei der bekannten Steckverbindung verhältnismäßig kompliziert, bedingt dadurch, daß eine separate Ringfeder vorgesehen ist, wodurch der Einsetzungsvorgang nur mit verhältnismäßig großen Schwierigkeiten bewerkstelligt werden kann. Schließlich muß besagte Feder angesichts der konstruktionsbedingt verhältnismäßig niedrigen Bauhöhen relativ steif sein, so daß es bei zunehmender Druckbeanspruchung in axialer Richtung rasch zu einem deutlichen Anstieg der feder bedingten Gegenkraft kommt, resultierend darin, daß Stoßbeanspruchungen nicht über einen verhältnismäßig langen Weg mit der gewünschten "Weichheit" aufgefangen werden können.

Bei einer anderen Steckverbindung ist das mit dem Befestigungskopf des Stiftzahnpfostens oder dgl. verbundene Steckerteil im wesentlichen kugelförmig ausgebildet, wobei der Bereich größten Durchmesser der Kugel in dem Bereich der dem Befestigungskopf zugewandten Einschnürung von dem als O-Ring aus relativ weichem Kunststoff- und/oder Gummimaterial ausgebildeteten Klemmring hintergriffen wird, der gleichzeitig die elastische Lagerung des Sockelteils und damit des Prothesenaufbaus in Richtung der Symmetrielängsachse des Befestigungskopfes gewährleistet. Die Stirn-Innenfläche des Sockelteils, die im wesentlichen senkrecht zur Symmetrielängssachse der Steckverbindung liegt, ist dabei mit Abstand von dem dem Befestigungskopf abgewandten Ende des Steckerteils gehalten, so daß also bei einer Stoßbeanspruchung oder dgl., auch bei Kaubewegungen, die in Richtung der Symmetrielängsachse wirkenden Kräfte kein Andrücken des Sockelteils und damit des Prothesenaufbaus an das Steckerteil und damit an den Befestigungskopf des Stiftzahnpfostens bewirken können. Hierdurch ist in erwünschter Weise gewährleistet, daß nicht die gesamte auf den Prothesenaufbau ausgeübte Kraft etwa auf den Stiftzahnpfosten gelenkt wird, sondern nach einer Bewegung in Richtung der Symmetrielängsachse von z.B. 0,5 mm ein Abstützen der Zahnprothese oder dgl. am Kieferkamm erfolgt. Dabei können jedoch durch die "schwimmende" Lagerung des Sockelteils infolge des sowohl die Klemm- und Haltefunktion als auch die federnde Lagerungsfunktion erfüllenden O-Ringes seitliche Bewegungen auftreten, die insgesamt nach kurzer Zeit zu einer Zerstörung des O-Ringes führen. Diese Steckverbindung hat demzufolge den Nachteil, daß sie nach verhältnismäßig kurzer Zeit verschleißt, wobei häufig bereits nach wenigen Wochen der O-Ring - bzw., sofern, wie üblich, die Prothese von mehreren derartigen Steckverbindungen getragen ist - die O-Ringe ausgewechselt werden muß.

Eine weitere Steckverbindung für Prothesenaufbauten oder dgl. ist dadurch realisiert, daß am Befestigungskopf des Stiftzahnpfosten oder dgl. einen "Sockel" in Form einer mit einer Hinterschneidung versehenen Halbkugelschale aus Polyoxymethylen oder dgl. angeordnet ist, in die im Schnappsitz ein kugelförmiger "Stecker" des Prothesenaufbaus eingreift, jedoch hat diese Steckverbindung den Nachteil, daß infolge des notwendigerweise verhältnismäßig steifen Materials der Halb- oder Dreiviertel-Kugelschale, wie Polyoxymethylen, die Vertikalelastizität zu wünschen übrig läßt. Demzufolge können Druckbeanspruchungen des Prothesenaufbaus im wesentlichen nicht am Kieferkamm abgestützt werden, sondern werden vollständig auf den Stiftzahnpfosten oder dgl. übertragen, mit allen nachteiligen, hieraus resultierenden Folgen. Ein weiterer Nachteil dieser Steckverbindung besteht darin, daß zwischen Kugelkopf und Kugelschale Ablagerungen eintreten können, z.B. in Form feinkristalliner Kalkkörner, die einen raschen Verschleiß des Kugelkopfes der Steckverbindung bewirken.

Zwar beschäftigt sich die DE-A-34 13 811 auch mit der Schaffung eines geeigneten Puffers zwischen Zahnersatz und Implantat, aber das dort vorgesehene ringförmige Pufferelement kann sich bei einer Druckbeanspruchung lediglich kompressionselastisch verhalten und stellt daher für gemischte axiale und Scher-Beanspruchungen beim Kauvorgang keine einwandfreie Abfederung sicher.

Der Erfindung liegt die Aufgabe zugrunde, eine Steckverbindung der eingangs genannten Art zu schaffen, welche bei hoher Elastizität der erzielbaren Abstützung und hoher Verschleißbeständigkeit eine weich-federnde Lagerung des Sockelteils gegenüber dem Steckerteil gewährleistet, wobei der Zusammenbau der Steckverbindung vereinfacht sein soll.

Erfindungsgemäß wird diese Aufgabe durch die im Kennzeichen des Patentanspruches 1 genannten Merkmale gelöst.

Besonders bevorzugte Ausführungsformen der Steckverbindung gemäß der Erfindung sind Gegenstand der Patentansprüche 2 bis 6.

Der Erfindung liegt die überraschende Erkenntnis zugrunde, daß es gelingt, die Nachteile des Standes der Technik zu überwinden, indem die beim gattungsgemäßen Stand der Technik bislang in einem einzigen Element, nämlich dem Klemmring, kombinierte Funktion einerseits des Haltens des Sockelteiles auf dem Steckerteil und andererseits des elastischen Abstützens des Sockelteiles auf zwei getrennte Elemente verteilt wird: Dabei handelt es sich einmal um den vorzugsweise aus verhältnismäßig hartem Kunststoffmaterial, wie Polyoxymethylen, bestehenden Klemmring, dessen im wesentlichen ausschließliche Funktion darin besteht, das Sockelteil lösbar auf dem Steckerteil zu halten, und zum anderen um den aus verhältnismäßig weichem Material bestehenden Lagerungsring, dessen im wesentlichen einzige Funktion darin besteht, das Sockelteil federnd gegenüber dem Steckerteil und damit gegenüber dem Befestigungskopf des Stiftzahnpfostens oder dgl. abzustützen. Wenn der Klemmring, wie dies bei einer bevorzugten Ausführungsform der Erfindung der Fall ist, aus rechteckigem Material hergestellt ist und, gehalten durch einen Haltering, teilweise in einer entsprechenden Ausnehmung des Sockelteiles sitzt, erfüllt er die weitere Funktion, denjenigen Innenbereich des Sockelteiles, in dem der empfindliche, weil aus verhältnismäßig weichem, elastischem Material bestehende, Lagerungsring angeordnet ist, gegenüber der Mundhöhle abzudichten, so daß keinerlei möglicherweise den Lagerungsring negativ beinflussende Ablagerungen in den Zwischenraum zwischen dem Sockelteil und der konischen Mantelfläche des Steckerteiles eindringen können.

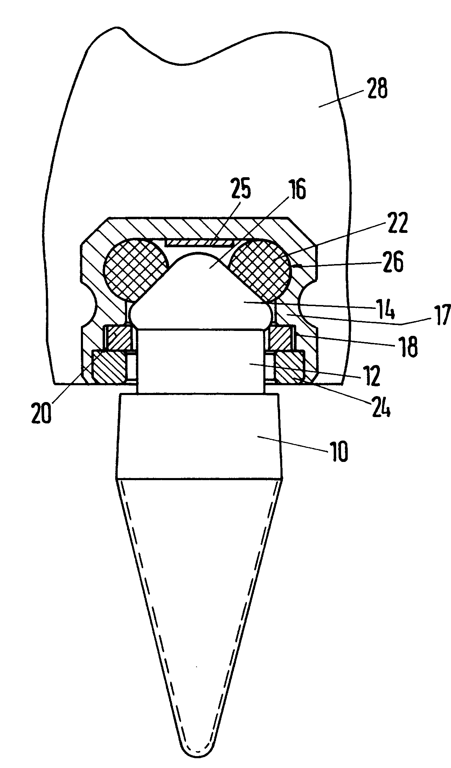

Weitere Merkmale und Vorteile der Erfindung ergeben sich aus der nachstehenden Beschreibung, in der ein Ausführungsbeispiel anhand der Zeichnung im einzelnen erläutert ist.

Dabei zeigt die aus einer einzigen Figur bestehende Zeichnung ein Ausführungsbeispiel einer Steckverbindung nach der Erfindung im schematischen Schnitt.

Wie die Zeichnung erkennen läßt, weist ein Stiftzahnpfosten 10, aus Titan bestehend, an seinem oberen Ende ein Steckerteil aus einem im wesentlichen zylindrischen Unterteil 12 und einem im wesentlichen pilzförmigen Oberteil 14 auf, dessen größter Durchmesser nahe dem oberen Ende des Unterteiles 12 liegt und dessen Mantelfläche von dem Bereich größten Durchmessers aus im wesentlichen konisch zu einer Oberteilspitze 16 ansteigt. In einem Sockelteil 17, ebenfalls aus Titan bestehend, ist eine Ringausnehmung 18 vorgesehen, welche teilweise einen Klemmring 20 aus Polyoxymethylen aufnimmt, welcher die durch das Unterteil 12 gebildete Einschnürung hinter dem Bereich größten Durchmessers des Oberteils 14 des Steckerteils 12, 14 hintergreift. Ein Lagerungsring 22 aus relativ weichem Silikonkautschuk, als O-Ring ausgebildet, liegt zwischen der konischen Mantelfläche des Oberteils 14 und der Innenfläche des Sockelteils 17. Der Klemmring 20 ist in der Ringsausnehmung 18 des Sockelteils 17 durch einen Haltering 24 aus Titan gehalten, wobei also der Klemmring 20, bei der Herstellung der Einzelelemente der Steckverbindung, zunächst in die noch offene Ringausnehmung 18 eingelegt wird, woraufhin dann der Haltering 24 eingesetzt und befestigt wird, z.B. mittels Bördelung. Zwischen der Stirn-Innenfläche des Sockelteils und der Oberteilspitze 16 des Steckerteils befindet sich eine Dämpfungsschicht 25 in Form eines Silikonkautschukplättchens, welches an die Innenfläche des Sockelteils angeklebt ist. Eine Ringnut 26 des Sockelteils dient zum teilweisen Aufnehmen des Lagerungsrings 22, während schließlich das Sockelteil 17 den Prothesenaufbau 28 trägt, der nicht Gegenstand der Erfindung ist.

Die Steckverbindung nach der Erfindung arbeitet wie folgt: Nach dem Einsetzen des Stiftzahnpfostens 10 - natürlich könnte es sich dabei auch um einen Implantatpfosten, ggf. aber auch um einen an einem Zahnstumpf angebrachten Befestigungskopf etc. handeln - wird das mit dem Prothesenaufbau 28 verbundene Sockelteil, in dem bereits die "losen" Elemente, nämlich der Lagerungsring 22 und der Klemmring 20, plaziert worden sind, in Richtung der Symmetrielängsachse auf das Oberteil 14 gedrückt, wobei sich der Klemmring 20 leicht aufweitet und schließlich hinter den Bereich größten Durchmessers des pilzförmigen Oberteils 14 des Steckerteils 12, 14 schnappt. In dieser Stellung hat die Oberteilspitze 14 von der Innen-Stirnfläche des Sockelteils 17 einen Abstand von z.B. einem Millimeter. Bei Druckbeanspruchungen infolge von Kaubewegungen etc. ist in weitem Maße, nämlich bis zu einem Millimeter, eine durch den elastischen Lagerungsring 22 abgefederte Relativbewegung in Richtung der Symmetrielängsachse zwischen dem Sockelteil 17 und dem Unterteil 12, 14 und damit dem Stiftzahnpfosten 10 möglich. Gleichzeitig ist die Lagerung in Richtung quer zur Symmetrielängsachse außerordentlich präzise, keineswegs also schwimmend, wodurch insgesamt ein befriedigender Sitz des Prothesenaufbaus oder dgl. gewährleistet ist.

## Patentansprüche

1. Steckverbindung zum lösbaren Anbringen eines Prothesenaufbaus am Befestigungskopf eines Stiftzahnpfostens, mit einem an dem Befestigungskopf vorgesehenen Steckerteil (12, 14), welches in einer im wesentlichen senkrecht zur Symmetrielängsachse des Befestigungskopfes liegenden Ebene eine umlaufende Einschnürung aufweist, einem den Prothesenaufbau tragenden Sockelteil (17) und einem die Einschnürung des Steckerteiles (12, 14) unter Herstellung einer Formschlußverbindung zwischen diesem und dem Sockelteil (17) hintergreifenden elastischen Klemmring (20), wobei das Sockelteil (17) im Verhältnis zum Steckerteil (12, 14) im Hinblick auf im wesentlichen in Richtung der Symmetrielängsachse des Befestigungskopfes erfolgende axiale Stoßbeanspruchungen elastisch gelagert ist, wobei das Steckerteil (12, 14) ein an den Stiftzahnpfosten (10) anschließendes zylindrisches Unterteil (12) und ein daran anschließendes pilzförmiges Oberteil (14) aufweist, dessen Außendurchmesser nahe dem dem Stiftzahnpfosten (10) abgewandten Ende des Unterteils (12) am größten ist und dessen Mantelfläche von dem Bereich größten Durchmessers aus im wesentlichen konisch auf eine abgeflachte Oberteilspitze (16) hin verläuft, wobei das Sockelteil (17) im Bereich der Einschnürung eine Ringausnehmung (18) zum teilweisen Aufnehmen des elastischen Klemmrings (20) aufweist, und wobei zwischen dem Oberteil (14) und dem Sockelteil (17) ein axial federndes Lagerelement (22) angeordnet ist, **dadurch gekennzeichnet**, daß der Außendurchmesser des Oberteiles (14) nahe dem dem Stiftzahnpfosten (10) abgewandten Ende des Unterteiles (12) den Außendurchmesser des Unterteiles (12) übersteigt; daß das axial federnde Lagerelement aus einem als O-Ring ausgebildeten Lagerungsring (22) aus elastischem Kunststoff- und/oder Gummimaterial besteht, der zwischen der konischen Mantelfläche des Oberteiles (14) und der Innenfläche des Sockelteiles (17) angeordnet und teilweise in einer Ringnut (26) des Sockelteiles (17) aufgenommen ist; daß der Klemmring (20) aus Kunststoffmaterial, wie Polyoxymethylen, besteht; und daß das Material des Klemmringes (20) wesentlich steifer ist als dasjenige des Lagerungsringes (22).

2. Steckverbindung nach Anspruch 1, **dadurch gekennzeichnet**, daß das Material des Klemmrings (20) im wesentlichen rechteckigen Querschnitt hat.

3. Steckverbindung nach Anspruch 1 oder 2, **dadurch gekennzeichnet**, daß der Klemmring (20) in der Ringausnehmung (18) des Sockelteiles durch einen Haltering (24) festgehalten ist.

4. Steckverbindung nach einem der vorangehenden Ansprüche, **dadurch gekennzeichnet**, daß zwischen der Oberteilspitze (16) des Steckerteils und der in Richtung der Symmetrielängsachse gegenüberliegenden Innen-Stirnfläche des Sockelteils (17) eine Dämpfungsschicht (25) angeordnet ist.

5. Steckverbindung nach Anspruch 4, **dadurch gekennzeichnet**, daß die Dämpfungsschicht (25) auf der Oberteilspitze (16) angebracht ist.

6. Steckverbindung nach Anspruch 4, **dadurch gekennzeichnet**, daß die Dämpfungsschicht (25) an der Stirn-Innenfläche des Sockelteils (17) angebracht ist.

## Claims

1. A snap-in connection for releasably mounting a dental prosthesis on the fixing head of a pivot post, comprising a push-in part (12, 14) provided on the fixing head and having a peripheral constriction in a plane situated substantially at right angles to the longitudinal axis of symmetry of the fixing head, a socket part (17) carrying the dental prosthesis and an elastic clamp ring (20) which engages behind the constriction of the push-in part (12, 14) to form a positive connection between the latter and the socket part (17), the latter being mounted elastically in relation to the push-in part (12, 14) in respect of axial impact stresses occurring substantially in the direction of the longitudinal axis of symmetry of the fixing head, the push-in part (12, 14) comprising a cylindrical bottom part (12) adjoining the pivot post (10), followed by a mushroom-shaped top part (14), the outside diameter of which is largest near that end of the bottom part (12) which is remote from the pivot post (10), and the outer surface of which extends from the largest-diameter zone substantially conically towards a flattened point (16) at the top, the socket part (17) having, in the constriction zone, an annular recess (18) for partially receiving the elastic clamp ring (20), an axially resilient bearing element (22) being disposed between the top part (14) and the socket part (17), characterised in that the outside diameter of the top part (14) near that end of the bottom part (12) which is remote from the pivot post (10) exceeds the outside diameter of the bottom part (12); in that the axially resilient bearing element consists of a bearing ring (22) in the form of an O-ring made of elastic plastic and/or rubber material and disposed between the conical outer surface of the top part (14) and the inner surface of the socket part (17) and partially received in an annular groove (26) in the socket part (17); in that the clamp ring (20) consists of plastic material, such as polyoxymethylene; and in that the material of the clamp ring (20) is substantially stiffer than that of the bearing ring (22).

2. A snap-in connection according to claim 1, characterised in that the material of the clamp ring (20) is of substantially rectangular cross-section.

3. A snap-in connection according to claim 1 or 2, characterised in that the clamp ring (20) is held fast in the annular recess (18) of the socket part by means of a retaining ring (24).

4. A snap-in connection according to any one of the preceding claims, characterised in that a damping layer (25) is disposed between the point (16) on the top part of the push-in part and the inner end face of the socket part (17) situated opposite as considered in the direction of the longitudinal axis of symmetry.

5. A snap-in connection according to claim 4, characterised in that the damping layer (25) is disposed on the point (16) of the top part.

6. A snap-in connection according to claim 4, characterised in that the damping layer (25) is disposed on the end inner face of the socket part (17).

## Revendications

1. Dispositif de fixation amovible d'une prothèse dentaire sur la tête de fixation d'une tige de dent à tenon, comprenant une partie formant fiche (12, 14) qui est disposée sur la tête de fixation et qui comporte un rétrécissement périphérique situé dans un plan sensiblement perpendiculaire à l'axe de symétrie longitudinale de la tête de fixation, une partie formant socle (17) qui porte la prothèse, et un anneau de serrage élastique (20) qui s'engage derrière le rétrécissement de la partie formant fiche (12, 14) en créant une liaison emboîtée entre cette dernière et la partie formant socle (17), la partie formant socle (17) étant montée élastiquement par rapport à la partie formant fiche (12, 14) en raison des contraintes de choc axiales se produisant sensiblement dans la direction de l'axe de symétrie longitudinale de la tête de fixation, la partie formant fiche (12, 14) comportant une partie inférieure cylindrique (12) qui prolonge la tige de dent à tenon (10) et une partie supérieure (14) en forme de champignon qui prolonge ladite partie inférieure (12), dont le diamètre extérieur est le plus grand à proximité de l'extrémité de la partie inférieure (12) opposée à la tige de dent à tenon (10) et dont la surface latérale s'étend, à partir de la zone de plus grand diamètre, sensiblement sous forme conique en direction du sommet aplati (16) de la partie supérieure, la partie formant socle (17) comportant, dans la zone du rétrécissement, un évidement annulaire (18) destiné à recevoir partiellement l'anneau de serrage élastique (10), et entre la partie supérieure (14) et la partie formant socle (17) étant disposé un élément d'appui élastique axialement (22), **caractérisé en ce que** le diamètre extérieur de la partie supérieure (14) à proximité de l'extrémité de la partie inférieure (12) opposée à la tige de dent à tenon (10) est supérieur au diamètre extérieur de la partie inférieure (12) ; en ce que l'élément d'appui élastique axialement est constitué par un anneau d'appui (22) qui est conçu sous la forme d'un joint torique et réalisé en matière plastique et/ou en caoutchouc élastique et qui est disposé entre la surface latérale conique de la partie supérieure (14) et la surface intérieure de la partie formant socle (17) et est logé partiellement dans une gorge annulaire (26) de la partie formant socle (17) ; en ce que l'anneau de serrage (20) est réalisé en matière plastique comme du polyoxyméthylène ; et en ce que le matériau de l'anneau de serrage (20) est nettement plus rigide que celui de l'anneau d'appui (22).

2. Dispositif de fixation selon la revendication 1, **caractérisé en ce que** le matériau de l'anneau de serrage (20) possède une section transversale sensiblement rectangulaire.

3. Dispositif de fixation selon la revendication 1 ou 2, **caractérisé en ce que** l'anneau de serrage (20) est immobilisé dans l'évidement annulaire (18) de la partie formant socle par un anneau de retenue (24).

4. Dispositif de fixation selon l'une des revendications précédentes, **caractérisé en ce qu**'une couche d'amortissement (25) est disposée entre le sommet (16) de la partie supérieure de la partie formant fiche et la surface frontale intérieure de la partie formant socle (17), ladite surface frontale intérieure se trouvant en vis-à-vis dudit sommet dans la direction de l'axe de symétrie longitudinale.

5. Dispositif de fixation selon la revendication 4, **caractérisé en ce que** la couche d'amortissement (25) est placée sur le sommet (16) de la partie supérieure.

6. Dispositif de fixation selon la revendication 4, **caractérisé en ce que** la couche d'amortissement (25) est placée sur la surface intérieure frontale de la partie formant socle (17).
